# EUROPEAN PATENT APPLICATION

(11) **EP 3 588 959 A1**
(43) Date of publication of application: **01.01.2020**
(21) Application number: 18899005.5
(22) Date of filing: 14.06.2018
(51) Int. Cl.: H04N 19/40

(54) **TRANSCODING METHOD AND DEVICE FOR AUDIO-VIDEO STREAM**

(30) Priority: 18.05.2018 CN 201810481764
(71) Applicant: Wangsu Science & Technology Co., Ltd., Shanghai 200030 (CN)
(72) Inventor: JING, Rui, Shanghai 200030 (CN); MA, Liang, Shanghai 200030 (CN); LV, Shibiao, Shanghai 200030 (CN)
(74) Representative: Hanna Moore + Curley
(86) International application number: PCT/CN2018/091207
(87) International publication number: WO 2019/218415

(57) **Abstract**

The present invention provides a transcoding method and a device for audio/video streams. The method includes: acquiring an audio/video source stream from a source server, and when transcoding the audio/video source stream, designating a preset encapsulation format as an encapsulation format of the audio/video source stream; analyzing header data of the audio/video source stream to obtain configuration information of the audio/video source stream, and respectively initializing a video decoder and an audio decoder according to the configuration information; and decoding the audio/video source stream using the initialized video decoder and audio decoder, re-encoding decoded audio/video data as a target audio/video stream, and pushing the target audio/video stream to a live broadcast server. The transcoding method and device for audio/video streams provided by the present disclosure may improve the transcoding speed.

## Description

### FIELD OF THE INVENTION

The present invention generally relates to the technical field of audio/video processing and, more particularly, relates to a transcoding method and a device for audio/video streams.

### BACKGROUND

With the continuous development of Internet technology, the dominant contents in the Internet have gradually developed from words, pictures to audio/video. Currently, due to a variety of audio/video formats, the audio/video formats uploaded to the Internet by different users may not be same. However, the client playing audio/video may not be able to adapt to all audio/video formats. Therefore, before providing audio/video to the client, the audio/video formats may be generally converted to the formats supported by the client, so the client may properly play received audio/video.

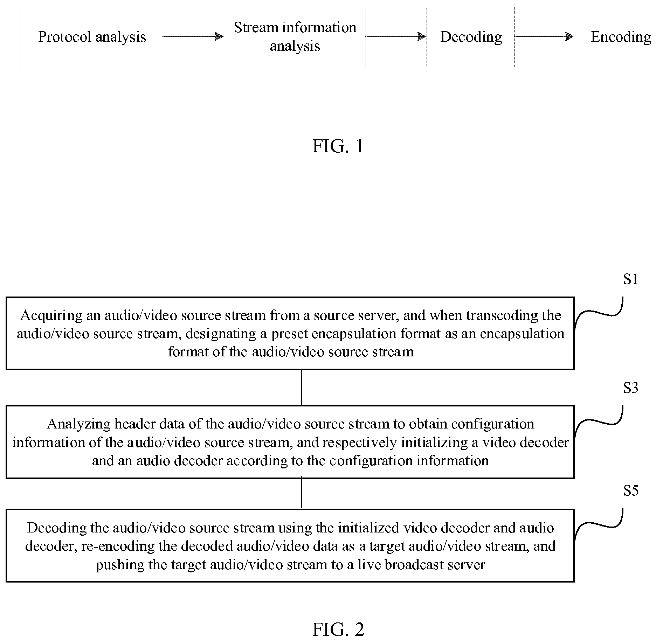

Referring to FIG. 1, currently, the audio/video transcoding may generally include multiple processes such as protocol analysis, stream information analysis, decoding and encoding, where the protocol analysis process may need time to identify encapsulation formats of audio/video source streams. In addition, the protocol analysis stage may also need more time to determine parameters of the audio/video source streams. For example, when the fast forward moving picture experts group (ffmpeg) transcoding process performs the stream information analysis on an audio/video source stream in flash video (FLV) encapsulation format, it may be generally required to acquire at least 40 frames of video data from the audio/video source stream, so the frame rate corresponding to the audio/video source stream may be identified. In such way, the process of loading 40 frames of video data may seriously affect the efficiency of the entire transcoding.

It can be seen that the transcoding process in the existing technology may waste relatively large amount of time in multiple stages, resulting in a relatively slow transcoding speed and a relatively long waiting time for the users.

### BRIEF SUMMARY OF THE INVENTION

The purpose of the present disclosure is to provide a transcoding method and a device for audio/video streams, which may improve the transcoding speed.

To achieve above purpose, in one aspect, the present disclosure provides a transcoding method for audio/video streams. The method includes: acquiring an audio/video source stream from a source server, and when transcoding the audio/video source stream, designating a preset encapsulation format as the encapsulation format of the audio/video source stream; analyzing header data of the audio/video source stream to obtain configuration information of the audio/video source stream, and respectively initializing a video decoder and an audio decoder according to the configuration information; and decoding the audio/video source stream using the initialized video decoder and audio decoder, re-encoding the decoded audio/video data as a target audio/video stream, and pushing the target audio/video stream to the live broadcast server.

To achieve above purpose, in another aspect, the present disclosure provides a transcoding device. The device includes an encapsulation format configurating unit, configured to acquire an audio/video source stream from a source server, and designate a preset encapsulation format as an encapsulation format of the audio/video source stream when transcoding the audio/video source stream; a decoder initializing unit, configured to analyze header data of the audio/video source stream to obtain configuration information of the audio/video source stream and respectively initialize a video decoder and an audio decoder according to the configuration information; and a re-encoding unit, configured to decode the audio/video source stream using the initialized video decoder and audio decoder, re-encode the decoded audio/video data as a target audio/video stream and push the target audio/video stream to the live broadcast server.

To achieve above purpose, in another aspect, the present disclosure provides a transcoding device. The device includes a memory and a processor, where the memory is configured to store computer programs and the above-mentioned transcoding method is implemented when the computer programs are executed by the processor.

It can be seen from the above that, for the technical solution provided by the present disclosure, the preset encapsulation formats may be directly designated as the encapsulation formats of the audio/video source streams in the protocol analysis stage of the transcoding process, and there may be no need to analyze the corresponding encapsulation formats according the data of the audio/video source streams, so the process of protocol analysis may be eliminated. In addition, in the stream information analysis stage, there may be no need to wait for loading the multi-frame data of the audio/video source streams, but directly analyzing the header data of the audio/video source streams. The header data may include the audio configuration parameters and the video configuration parameters, so the process of waiting for loading the multi-frame data may be eliminated. Further, when configuring the frame rate for the video decoder, if an included frame rate may not be analyzed from the header data, the decoding frame rate of the video decoder may be configured as the default frame rate, which may avoid improper decoding due to the lack of the decoding frame rate and may further improve the transcoding efficiency. It can be seen from the above, for the technical solution provided by the present disclosure, the transcoding process in the existing technology may be optimized and the multiple time-consuming processes may be eliminated in the existing technology, thereby improving the speed of the entire transcoding stage.

### BRIEF DESCRIPTION OF THE DRAWINGS

To more clearly illustrate the technical solutions of the present invention, the accompanying drawings to be used in the description of the disclosed embodiments are briefly described hereinafter. Obviously, the drawings described below are merely some embodiments of the present invention. Other drawings derived from such drawings may be obtained by a person having ordinary skill in the art without creative labor.
FIG. 1 illustrates a schematic diagram of a transcoding process according to the existing technology;
FIG. 2 illustrates a flowchart of a transcoding method for audio/video streams according to embodiments of the present invention;
FIG. 3 illustrates a flowchart of a transcoding method including a frame rate checking process according to embodiments of the present invention;
FIG. 4 illustrates a schematic diagram of functional modules of a transcoding device for audio/video streams according to embodiments of the present invention;
FIG. 5 illustrates a structural schematic of a transcoding device for audio/video streams according to embodiments of the present invention; and
FIG. 6 illustrates a structural schematic of a computer terminal according to embodiments of the present invention.

### DETAILED DESCRIPTION

To more clearly describe the objectives, technical solutions and advantages of the present invention, the present invention is further illustrated in detail with reference to the accompanying drawings in conjunction with embodiments.

### Embodiment 1

The present disclosure provides a transcoding method for audio/video streams. The transcoding method may be applied to a transcoding device or a transcoding process. Referring to FIG. 2, the method may include the following.

In S1: acquiring an audio/video source stream from a source server, and when transcoding the audio/video source stream, designating a preset encapsulation format as the encapsulation format of the audio/video source stream.

In one embodiment, the source server may be a server that stores an original audio/video stream. The original audio/video stream may be the above-mentioned audio/video source stream. Before the audio/video source stream needs to be provided to a client for playing, the audio/video source stream may be converted into a format that may be identified by the client through a transcoding device or a transcoding progress.

In one embodiment, after acquiring the audio/video source stream, the audio/video source stream may be transcoded according to a proper transcoding procedure, but the partial procedure may be optimized during the transcoding process. Specifically, when starting to transcode the audio/video source stream, the data of the audio/video source stream may generally need to be analyzed to determine the encapsulation format of the audio/video source stream. In one embodiment, the analysis process may be eliminated, and the preset encapsulation format may be directly designated as the encapsulation format of the audio/video source stream. The preset encapsulation format may be known in advance before transcoding the audio/video source stream. In actual applications, the encapsulation format of the audio/video source stream may generally be determined by the suffix name of a file. After acquiring the audio/video source stream from the source server, the suffix name of the audio/video source stream may be identified, so the encapsulation format indicated by the suffix name may be used as the preset encapsulation format. In addition, in another application scenario, the source server may be a server in a source node of a content delivery network (CDN). When managing the server in the source node, the CDN operator may only store the audio/video source stream with the same encapsulation format in the same source server; or may start to set up multiple different storage areas in the same source server and only store the audio/video source stream with the same encapsulation format in the same storage area. In such way, a corresponding relationship may be established between the source server and the encapsulation format, or between the storage area and the encapsulation format. When acquiring the audio/video source stream, the source server or the storage area where the audio/video source stream is located may be identified, so the encapsulation format corresponding to the audio/video source stream may be known. In such way, the known encapsulation format may be used as the preset encapsulation format.

According to the above-mentioned description, when acquiring the audio/video source stream by the transcoding device or the transcoding progress, the encapsulation format of the audio/video source stream may be already known, so the protocol analysis stage may not be needed, thereby saving the transcoding time.

In S3: analyzing header data of the audio/video source stream to obtain configuration information of the audio/video source stream, and respectively initializing a video decoder and an audio decoder according to the configuration information.

In one embodiment, after configuring the encapsulation format of the audio/video source stream, the configuration information of the audio/video source stream may need to be identified, so the video decoder and the audio decoder may be initialized using the identified configuration information. In the existing technology, after loading the multi-frame data of the audio/video source stream, the loaded multi-frame data may generally be analyzed to obtain the corresponding configuration information. However, the waiting time for loading the multi-frame data may be too long. In one embodiment, the header data of the audio/video source stream may be directly analyzed. The header data may be, for example, advanced video coding (AVC) header data or advanced audio coding (AAC) header data. The configuration information contained in different header data may also be different. Specifically, if the current header data is audio header data (AAC header), an audio sample rate and an audio channel number may be extracted from the audio header data, and the extracted audio sample rate and audio channel number may be used as the configuration information of audio data in the audio/video source stream. Of course, in actual applications, the audio header data may also include a variety of other parameters, which may be not described herein; and more configuration information may be analyzed according to actual requirements. The above-mentioned audio sample rate and audio channel number may be only for the convenience of describing the technical solution of the present disclosure, but the technical solution of the present disclosure may not only apply to two above-mentioned configuration information. Those skilled in the art should be aware that, in the case of understanding the essence of the technical solution of the present disclosure, extracting more configuration information from the audio header data should also fall within the protection scope of the present disclosure.

In one embodiment, after extracting the configuration information from the audio header data, the extracted configuration information may be utilized to initialize the audio decoder. For example, the audio sample rate extracted from the audio header data may be configured as the decoding sample rate of the audio decoder, so the audio decoder may perform the decoding process properly. Of course, in actual applications, if the extracted configuration information includes other parameters, the audio decoder may also be configured using the other parameters during the initialization process.

In one embodiment, if the current header data is video header data (AVC header), a video frame resolution, a frame rate and a video format may be extracted from the video header data, and the extracted video frame resolution, frame rate and video format may be used as the configuration information of video data in the audio/video source stream. Of course, Those skilled in the art should be aware that, in the case of understanding the essence of the technical solution of the present disclosure, extracting more configuration information from the video header data should also fall within the protection scope of the present disclosure.

In one embodiment, after extracting the configuration information from the video header data, the extracted configuration information may be utilized to initialize the video decoder. For example, the frame rate extracted from the video header data may be configured as the decoding frame rate of the video decoder, and the above-mentioned video frame resolution may be configured as the decoding resolution of the video decoder. In such way, the video decoder may perform a subsequent decoding process properly. Of course, in actual applications, if the extracted configuration information includes other parameters, the video decoder may also be configured using the other parameters during the initialization process.

In one embodiment, considering sometimes it is possible that the frame rate may not be extracted from the video header data when analyzing the video header data, so, if the frame rate is not configured for the video decoder, the decoding may be performed improperly, and the transcoding process may not continue. In order to overcome the defect, in one embodiment, if the frame rate may not be extracted from the video header data, the decoding frame rate of the video decoder may be configured as the default frame rate. The default frame rate may be a frame rate with relatively high compatibility and may be summarized based on the history of transcoding records. In such way, even the frame rate may not be extracted from the video header data, the subsequent video decoding process may be performed properly.

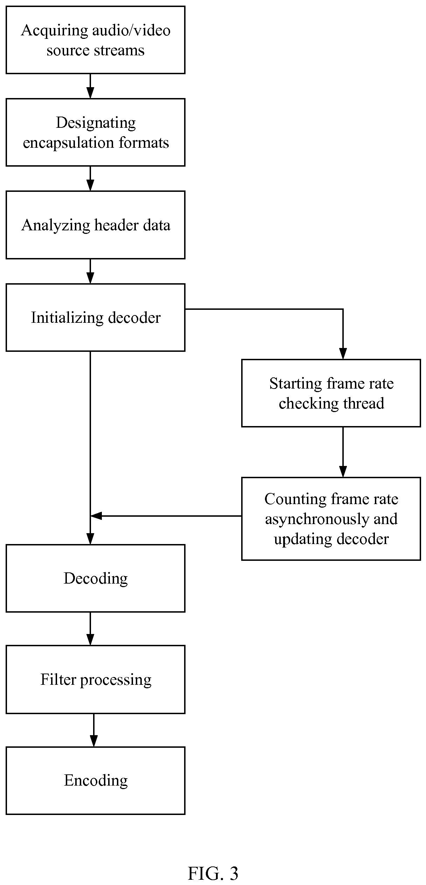

Referring in FIG. 3, in one embodiment, in order to ensure that the configured frame rate of the initialization in the video encoder is the same as the actual frame rate of the audio/video source stream, a frame rate checking thread may be started at the stage of initializing the video decoder. The frame rate checking thread may be operated asynchronously and may be executed simultaneously with the stage of the stream information analysis in the transcoding process, which may save time in the transcoding process. Specifically, the frame rate checking thread may count the number of video frames acquired from the audio/video source stream within a designated duration. Then, a standard frame rate corresponding to the audio/video source stream may be calculated according to the designated duration and the acquired number of the video frames. For example, the frame rate checking thread may read N video frames for a period of time, and then record the timestamps of the first video frame and the last video frame of the N video frames respectively. The difference between the two recorded timestamps may indicate the duration corresponding to the N video frames. Of course, in actual applications, the unit of the difference between the two timestamps may not meet the unit requirement of the frame rate calculation. For example, the difference between the two timestamps may be in milliseconds, while the frame rate may be calculated in seconds, so the unit of the difference between the two timestamps may be converted to the unit used in the frame rate calculation process, thereby ensuring that the normal frame rate may be calculated finally. Then, the frame rate checking thread may determine if the calculated standard frame rate is consistent with the currently configured decoding frame rate in the video decoder; if not consistent, the frame rate analyzed from the video header data may be incorrect. At this time, the currently configured decoding frame rate in the video decoder may be modified to the standard frame rate, which may ensure that the decoding frame rate in the video decoder may match the actual frame rate of the audio/video source stream and may further ensure that the video decoding process may be performed smoothly.

In S5: decoding the audio/video source stream using the initialized video decoder and audio decoder, re-encoding the decoded audio/video data as a target audio/video stream, and pushing the target audio/video stream to the live broadcast server.

In one embodiment, after completing the initialization configuration of the video decoder and the audio decoder, the audio/video source stream may be decoded by the initialized video decoder and audio decoder to obtain the decoded audio/video data. Then, filter processing and encoding processing may perform on the decoded audio/video data sequentially, thereby obtaining the target audio/video stream which may be supported by the client. The target audio/video stream may be pushed to the live broadcast server which may be a streaming media server for providing audio/video streams to the users. Subsequently, the client may directly acquire the transcoded target audio/video stream from the live broadcast server.

In one embodiment, considering that the common audio/video format in the client is an X264 format, so the encoder used in re-encoding may be a X264 encoder. In the encoder, in order to improve the encoding speed, a target parameter for reducing latency may be configured, and the decoded audio/video data may be re-encoded by the encoder with the configured target parameter. For example, the target parameter for reducing latency may be the tune zero-latency parameter. After configuring the parameter, the X264 encoder may have a relatively low latency when encoding the decoded audio/video data, thereby improving the overall speed of the transcoding process.

In a specific application scenario, the audio/video source stream with determined FLV format may be acquired from the source server through the ffmpeg transcoding process. In such way, when the ffmpeg transcoding process transcodes the audio/video source stream, the encapsulation format may be designated as the FLV format, thereby eliminating the protocol analysis time. Then, the ffmpeg transcoding process may receive the AAC header or AVC header of the audio/video source stream, so included parameters such as the audio sample rate, the audio channel number, the video frame resolution, the video frame rate, the video format, etc. may be analyzed respectively. In such way, the waiting time for loading at least 40 frames of data may be eliminated. After extracting the corresponding configuration information from the AAC header and AVC header, the audio decoder and the video decoder may be initialized respectively using the configuration information. During the initialization, if the video frame rate is not included in the configuration information, the decoding frame rate of the video decoder may be configured as the default value to avoid improper transcoding. At the same time of the initialization, the frame rate checking thread may be started asynchronously. The frame rate checking thread may count the number of video frames acquired from the audio/video source stream with a designated duration. Then, the number of acquired video frames may be divided by the designated duration to obtain a number of frames transmitted per unit time. The number of frames transmitted per unit time may be the actual frame rate of the audio/video source stream. Then, the frame rate checking thread may determine if the calculated standard frame rate is consistent with the currently configured decoding frame rate in the video decoder; if not consistent, the frame rate analyzed from the video header data may be incorrect. At this time, the currently configured decoding frame rate in the video decoder may be modified to the standard frame rate, which may ensure that the decoding frame rate in the video decoder may match the actual frame rate of the audio/video source stream and may further ensure that the video decoding process may be performed smoothly. After completing the decoding process, the decoded audio/video data may be encoded by the X264 encoder configured with the tune zero-latency parameter for reducing latency, so the target audio/video stream supported by the client may be obtained. The target audio/video stream may be pushed to a streaming media server. Subsequently, the client may acquire the transcoded target audio/video stream from the streaming media server.

### Embodiment 2

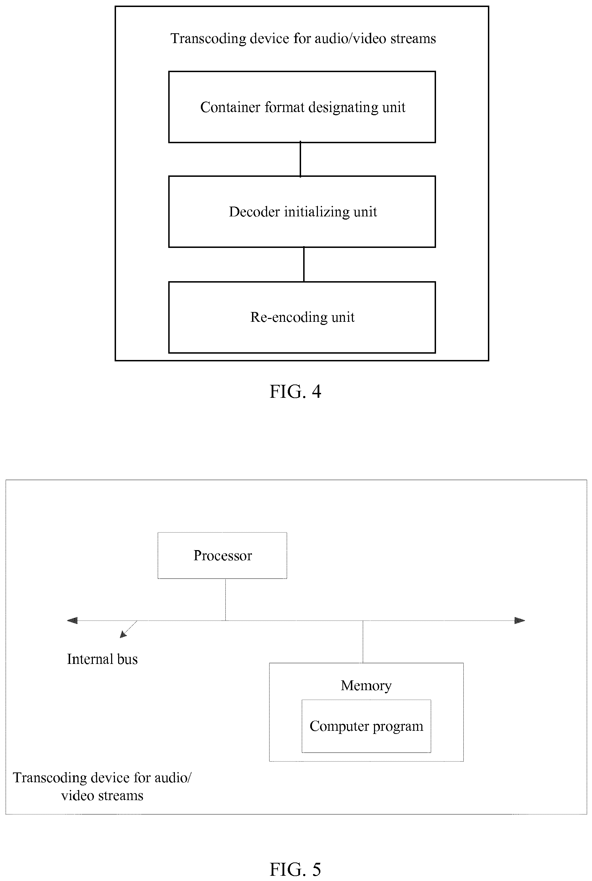

Referring to FIG. 4, the present disclosure also provides a transcoding device for audio/video streams, where the device may include:
an encapsulation format designating unit, configured to acquire an audio/video source stream from a source server, and designate a preset encapsulation format as an encapsulation format of the audio/video source stream when transcoding the audio/video source stream;
a decoder initializing unit, configured to analyze header data of the audio/video source stream, obtain configuration information of the audio/video source stream and respectively initialize a video decoder and an audio decoder according to the configuration information; and
a re-encoding unit, configured to decode the audio/video source stream using the initialized video decoder and audio decoder, re-encode the decoded audio/video data as a target audio/video stream and push the target audio/video stream to a live broadcast server.

In one embodiment, the decoder initializing unit may include:
a video configuration information extracting module, configured to extract a video frame resolution, a frame rate and a video format if the current header data is a video header data, and use the extracted video frame resolution, frame rate and video format as the configuration information of video data in the audio/video source stream.

In one embodiment, the decoder initializing unit may further include:
a frame rate configurating module, configured to set the frame rate extracted from the video header data as a decoding frame rate of the video decoder; and set the decoding frame rate of the video decoder as a default frame rate if the frame rate may not be extracted from the video header data.

In one embodiment, the device may further include:
a frame rate checking module, configured to count the number of video frames acquired from the audio/video source stream within a designated duration when the video decoder and the audio decoder are respectively initialized according to the configuration information;
a standard frame rate calculating module, configured to calculate a standard frame rate corresponding to the audio/video source stream according to the designated duration and the number of acquired video frames; and
a frame rate updating module, configured to determine if the standard frame rate is consistent with the currently configured decoding frame rate in the video decoder, and modify the currently configured decoding frame rate in the video decoder to the standard frame rate if not consistent.

In one embodiment, the re-encoding unit may include:
a parameter configurating module, configured to set a target parameter for reducing latency in the encoder and re-encode the decoded audio/video data using the encoder configured with the target parameter.

Referring to FIG. 5, the present disclosure also provides a transcoding device for audio/video streams. The device may include a memory and a processor. The memory is configured to store computer programs. The above-mentioned transcoding method for the audio/video streams may be implemented when the computer programs are executed by the processor.

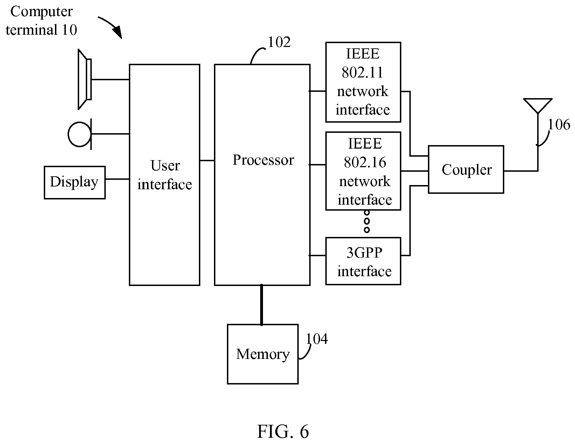

Referring to FIG. 6, in the present disclosure, the technical solution in the above-mentioned embodiments may be applied to the computer terminal 10 shown in FIG. 6. The computer terminal 10 may include one or more (only one is shown) processors 102 (the processor 102 may include, but not limited to, a microprocessor, a microcontroller unit (MCU) or a programmable logic device FPGA (field programmable gate array)), a memory 104 used to store data, a transmission module 106 used for communication functions. Those skilled in the art may understand that the structure shown in FIG. 6 is merely illustrative and are not intended to limit the structure of the above electronic device. For example, the computer terminal 10 may further include more or less components than shown in FIG. 6 or have different configurations from shown in FIG. 6.

Specifically, in the present disclosure, the above-mentioned transcoding method of audio/video streams may be stored as a computer program in the above-mentioned memory 104. The memory 104 may be coupled to the processor 102, so each step in the above-mentioned transcoding method for audio/video streams may be implemented when the processor 102 executes the computer program in the memory 104.

The memory 104 may also be used to store software programs and modules of application software, and the processor 102 may execute a variety of functional applications and data processing by running the software programs and modules which are stored in the memory 104. The memory 104 may include high-speed random-access memory and may also include non-volatile memory such as one or more magnetic storage devices, flash memory or other non-volatile solid-state memory. In some examples, the processor 104 may further include remote memory relative to the processor 102 and the remote memory may be connected to the computer terminal 10 via a network. The above-mentioned network examples include, but not limited to, the Internet, enterprise intranets, local area networks, mobile communication networks and combinations thereof.

The transmission device 106 is used receive or transmit data via a network. The above-mentioned specific network examples may further include a wireless network provided by a communication provider of the computer terminal 10. In an example, the transmission device 106 may include a network interface controller (NIC) which may communicate with the Internet by connecting with other network devices via a base station. In an example, the transmission device 106 may be a radio frequency (RF) module which may communicate with the Internet via a wireless method.

It can be seen from the above that, for the technical solution provided by the present disclosure, the preset encapsulation formats may be directly designated as the encapsulation formats of the audio/video source streams in the protocol analysis stage of the transcoding process, and there may be no need to analyze the corresponding encapsulation formats according the data of the audio/video source streams, so the process of protocol analysis may be eliminated. In addition, in the stream information analysis stage, there may be no need to wait for loading the multi-frame data of the audio/video source streams, but directly analyzing the header data of the audio/video source streams. The header data may include the audio configuration parameters and the video configuration parameters, so the process of waiting for loading the multi-frame data may be eliminated. Further, when configuring the frame rate for the video decoder, if included frame rate may not be analyzed from the header data, the decoding frame rate of the video decoder may be configured as the default frame rate, which may avoid improper decoding due to the lack of the decoding frame rate and may further improve the transcoding efficiency. It can be seen from the above, for the technical solution provided by the present disclosure, the transcoding process in the existing technology may be optimized and the multiple time-consuming processes may be eliminated in the existing technology, thereby improving the speed of the entire transcoding stage.

Through the descriptions of aforementioned embodiments, those skilled in the art may clearly understand that the embodiments may be implemented by means of software in conjunction with an essential common hardware platform or may be simply implemented by hardware. Based on such understanding, the essential part of the aforementioned technical solutions or the part that contribute to the prior art may be embodied in the form of software products. The software products may be stored in computer readable storage media, such as ROM/RAM, magnetic disk, and optical disk, and may include a plurality of instructions to enable a computer device (may be a personal computer, a server, or a network device) to execute the methods described in various embodiments or parts of the embodiments.

The foregoing are merely certain preferred embodiments of the present invention and are not intended to limit the present invention. Without departing from the spirit and principles of the present invention, any modifications, equivalent substitutions, and improvements, etc. shall fall within the scope of the present invention.

## Claims

1. A method of transcoding audio/video streams, the method comprising:
acquiring an audio/video source stream from a source server, and when transcoding the audio/video source stream, designating a preset encapsulation format as an encapsulation format of the audio/video source stream;
analyzing header data of the audio/video source stream to obtain configuration information of the audio/video source stream, and respectively initializing a video decoder and an audio decoder according to the configuration information; and
decoding the audio/video source stream using the initialized video decoder and audio decoder, re-encoding the decoded audio/video data as a target audio/video stream, and pushing the target audio/video stream to a live broadcast server.

2. The method according to claim 1, wherein analyzing the header data of the audio/video source stream to obtain the configuration information of the audio/video source stream includes:
if current header data is audio header data, extracting an audio sample rate and an audio channel number from the audio header data, and using the extracted audio sample rate and audio channel number as the configuration information of audio data in the audio/video source stream.

3. The method according to claim 2, wherein initializing the audio decoder according to the configuration information includes:
configuring the audio sample rate extracted from the audio header data as a decoding sample rate of the audio decoder.

4. The method according to claim 1, wherein analyzing the header data of the audio/video source stream to obtain the configuration information of the audio/video source stream includes:
if current header data is video header data, extracting a video frame resolution, a frame rate and a video format from the video header data, and using the extracted video frame resolution, frame rate and video format as the configuration information of video data in the audio/video source stream.

5. The method according to claim 4, wherein initializing the video decoder according to the configuration information includes:
configuring the frame rate extracted from the video header data as a decoding frame rate of the video decoder; and
configuring the decoding frame rate of the video decoder as a default frame rate if the frame rate is unable to be extracted from the video header data.

6. The method according to claim 1, wherein the method further includes:
counting a number of video frames acquired from the audio/video source stream within a designated duration when the video decoder and the audio decoder are respectively initialized according to the configuration information;
calculating a standard frame rate corresponding to the audio/video source stream according to the designated duration and the number of acquired video frames; and
determining if the standard frame rate is consistent with a currently configured decoding frame rate in the video decoder and modifying the currently configured decoding frame rate in the video decoder as the standard frame rate if not consistent.

7. The method according to claim 1, wherein, when re-encoding the decoded audio/video data as the target audio/video stream, the method further includes:
configuring a target parameter for reducing latency in an encoder and re-encoding the decoded audio/video data using the encoder configured with the target parameter.

8. A device of transcoding audio/video streams, the device comprising:
an encapsulation format designating unit, configured to acquire an audio/video source stream from a source server, and designate a preset encapsulation format as an encapsulation format of the audio/video source stream when transcoding the audio/video source stream;
a decoder initializing unit, configured to analyze header data of the audio/video source stream to obtain configuration information of the audio/video source stream and respectively initialize a video decoder and an audio decoder according to the configuration information; and
a re-encoding unit, configured to decode the audio/video source stream using the initialized video decoder and audio decoder, re-encode the decoded audio/video data as a target audio/video stream and push the target audio/video stream to the live broadcast server.

9. The device according to claim 8, wherein the decoder initializing unit includes:
a video configuration information extracting module, configured to extract a video frame resolution, a frame rate and a video format if the current header data is video header data, and use the extracted video frame resolution, frame rate and video format as the configuration information of video data in the audio/video source stream.

10. The device according to claim 9, wherein the decoder initializing unit includes:
a frame rate configurating module, configured to set the frame rate extracted from the video header data to a decoding frame rate of the video decoder; and set the decoding frame rate of the video decoder to a default frame rate if the frame rate may not be extracted from the video header data.

11. The device according to claim 8, wherein the device further includes:
a frame rate checking module, configured to count a number of video frames acquired from the audio/video source stream within a designated duration when the video decoder and the audio decoder are respectively initialized according to the configuration information;
a standard frame rate calculating module, configured to calculate a standard frame rate corresponding to the audio/video source stream according to the designated duration and the number of acquired video frames; and
a frame rate updating module, configured to determine if the standard frame rate is consistent with the currently configured decoding frame rate in the video decoder and modify the currently configured decoding frame rate in the video decoder to the standard frame rate if not consistent.

12. The device according to claim 8, wherein the re-encoding unit includes:
a parameter configurating module, configured to set a target parameter for reducing latency in the encoder and re-encode the decoded audio/video data using the encoder configured with the target parameter.

13. A device of transcoding audio/video streams, wherein the device includes:
a memory and a processor, wherein the memory is configured to store computer programs, and when executing the computer programs, the processor is configured to perform the transcoding method according to any of claims 1 to 7.
